# EUROPÄISCHE PATENTSCHRIFT

(11) **EP 3 908 392 B1**
(45) Veröffentlichungstag und Bekanntmachung des Hinweises auf die Patenterteilung: **11.12.2024**
(21) Anmeldenummer: 20700264.3
(22) Anmeldetag: 08.01.2020
(51) Int. Cl.: B01D 46/00, A47L 9/10, B01D 46/10, B01D 46/42, B01D 46/52

(54) **FILTERVORRICHTUNG FÜR EINE SAUGMASCHINE UND SAUGMASCHINE**
FILTER APPARATUS FOR A SUCTION MACHINE AND SUCTION MACHINE
DISPOSITIF DE FILTRAGE POUR UNE MACHINE D'ASPIRATION ET MACHINE D'ASPIRATION

(30) Priorität: 10.01.2019 DE 102019100489
(43) Veröffentlichungstag der Anmeldung: 17.11.2021
(73) Patentinhaber: Alfred Kärcher SE & Co. KG, 71364 Winnenden (DE)
(72) Erfinder: LANGEN, Thorsten, 70190 Stuttgart (DE); ENGELHARDT, Rainer, 71397 Leutenbach (DE); FUCHS, Frank, 71277 Rutesheim (DE); DAMMKÖHLER, Denis, 71522 Backnang (DE)
(74) Vertreter: Hoeger, Stellrecht & Partner Patentanwälte mbB
(86) Internationale Anmeldenummer: PCT/EP2020/050296
(87) Internationale Veröffentlichungsnummer: WO 2020/144224

(56) Entgegenhaltungen:
- EP-A1- 1 985 351
- WO-A1-2004/098368
- DE-A1- 102011 083 445
- DE-A1- 102011 110 758
- DE-A1- 19 709 309
- GB-A- 2 440 515
- US-B1- 9 593 861

## Beschreibung

Die Erfindung betrifft eine Filtervorrichtung für eine Saugmaschine, umfassend einen Filtervorrichtung für eine Saugmaschine, umfassend einen Rahmen mit einem Filter aus Filtermaterial, wobei das Filter an dem Rahmen gehalten ist und eine Reinseite und eine Schmutzseite aufweist, und eine Kennzeichnung mit mindestens einem der Folgenden:
- die Kennzeichnung ist mindestens teilweise in einer für einen Bediener erkennbaren optischen Form;
- die Kennzeichnung ist mindestens teilweise maschinenlesbar;
- die Kennzeichnung enthält Informationen über die Filtervorrichtung und/oder das Filter.

Die Erfindung betrifft ferner eine Saugmaschine.

Die US 2014/0041525 A1 offenbart einen festen Duftträger, welcher eine polymere Matrix umfasst, die einen Duftstoff beinhaltet, und welche adhäsiv mit einem Filter oder einer Filtertasche verbunden ist.

Die US 2018/0140989 A1 offenbart einen Luftfilter mit einem Filtermedium, einem Sensor und einem Schaltkreis, welcher an den Sensor gekoppelt ist.

Die US 2010/0011530 A1 offenbart einen Staubsauger mit einem Filter und mit einem Filterreinigungsmechanismus.

Aus der DE 10 2013 103 872 A1 ist ein Staubsaugerfilterbeutel mit einer Staubsaugerfilterbeutelkennzeichnung bekannt.

Aus der US 2014/0091027 A1 ist eine Reinigungskassette bekannt.

Aus der US 2015/0008258 A1 ist ein System mit einem Informationsträger bekannt.

Aus der US 2005/0126477 A1 ist ein Filter bekannt, welcher eine Farbcodierung aufweist.

Weitere Filterelemente mit Kennzeichnungen sind in der EP1985351 und der DE102011110758 offenbart.

Aus der NL 1017515 C ist eine Filtervorrichtung bekannt.

Aus der US 5,762,796 ist ein Filterelement bekannt, welches ein Band aus einem Klebematerial aufweist, wobei an dem Band eine Kennzeichnung angeordnet ist.

Aus der US 4,787,923 ist eine Filterreinigungsvorrichtung bekannt.

Aus der WO 2016/112996 A1 ist ein Sauggerät mit einer Abreinigungseinrichtung für eine Filtereinrichtung bekannt.

Der Erfindung liegt die Aufgabe zugrunde, eine Filtervorrichtung der eingangs genannten Art bereitzustellen, welche für einen Bediener auf einfache Weise handhabbar ist.

Diese Aufgabe wird bei der eingangs genannten Filtervorrichtung erfindungsgemäß dadurch gelöst, dass mindestens ein Etikett vorgesehen ist, welches mindestens teilweise mit der Kennzeichnung versehen ist und welches an der Reinseite des Filters sitzt, wobei das mindestens eine Etikett stoffschlüssig mit dem Filter verbunden und mit Falzbereichen des Filters adhäsiv verbunden ist, und dadurch dass das Filter eine erste Seite zu dem Rahmen hin und eine der ersten Seite gegenüberliegende zweite Seite zu dem Rahmen hin aufweist, und dass das mindestens eine Etikett an der ersten Seite oder in einem Abstand von höchstens 10 % einer Länge zwischen der ersten Seite und der zweiten Seite zu einer Kante der ersten Seite an dem Rahmen beabstandet angeordnet ist.

Bei dem Betrieb der Saugmaschine mit eingesetzter Filtervorrichtung durchströmt ein Saugstrom das Filter aus Filtermaterial. Das Filter hat eine Schmutzseite und eine Reinseite, wobei eine Strömungsrichtung des Saugstroms von der Schmutzseite zu der Reinseite ist.

Insbesondere weist die Reinseite zu einem Reinraumbereich der Saugmaschine hin, wenn die Filtervorrichtung an der Saugmaschine eingesetzt ist.

Durch die Anordnung der Kennzeichnung an der Reinseite kann ein Bediener (oder auch ein Lesegerät) die Kennzeichnung auf einfache Weise auslesen. Auslesbarkeit ist auch gewährleistet, wenn die Filtervorrichtung schmutzbeladen ist.

Der Rahmen der Filtervorrichtung dient insbesondere dazu, einerseits das Filtermaterial zu halten. Andererseits dient er vorzugsweise dazu, die Filtervorrichtung an der Saugmaschine zu halten. Durch die Anordnung der Kennzeichnung an dem Filter und damit an dem Filtermaterial und insbesondere außerhalb des Rahmens, lässt sich die Filtervorrichtung auf einfache Weise mit der Kennzeichnung versehen. Es muss beispielsweise nicht der Rahmen bedruckt werden. Beispielsweise kann nach Herstellung der Filtervorrichtung mit dem Filter aus Filtermaterial ein Etikett mit der Kennzeichnung an der Reinseite des Filters fixiert werden.

Grundsätzlich erlaubt eine Kennzeichnung an der Reinseite der Filtervorrichtung eine einfache Lesbarkeit der Kennzeichnung vor dem Betrieb der Saugmaschine, während des Betriebs der Saugmaschine oder auch nach Betrieb der Saugmaschine. Es ist dadurch insbesondere auch auf einfache Weise eine maschinenlesbare Kennzeichnung realisierbar. Beispielsweise kann die Kennzeichnung auch durch ein Lesegerät, welches in die Saugmaschine integriert ist, ausgelesen werden.

Es ist ein zusätzliches Element wie ein Etikett an dem Filtermaterial fixiert ist.

Die Kennzeichnung ist beispielsweise eine (alphanumerische) Beschriftung, welche den Filtertyp angibt. Es ist beispielsweise auch möglich, dass die Kennzeichnung Informationen bezüglich der Saugmaschine umfasst, an welcher die mit der Kennzeichnung versehene Filtervorrichtung eingesetzt werden kann. Beispielsweise ist es alternativ oder auch zusätzlich möglich, dass die Kennzeichnung eine Farbcodierung umfasst, welche insbesondere anzeigt, mit welchen Saugmaschinen die Filtervorrichtung einsetzbar ist. Es sind beispielsweise auch andere Codierungsarten wie beispielsweise QR-Codes möglich. Die Kennzeichnung kann für einen Bediener direkt optisch erkennbar sein (wie beispielsweise über eine Beschriftung, eine Farbcodierung oder einem QR-Code). Alternativ oder zusätzlich ist es möglich, dass die Kennzeichnung maschinenlesbar ist (wie beispielsweise auch bei einer Farbcodierung und einer QR-Codierung). Die Kennzeichnung kann auch auf einem Datenträger angeordnet sein wie beispielsweise einem RFID-Chip, welcher entsprechend an der Reinseite des Filters (und dadurch des Filtermaterials) fixiert ist.

Das Filter aus Filtermaterial ist bei einer Ausführungsform ein Oberflächenfilter. Grundsätzlich ist es auch möglich, dass das Filter ein Tiefenfilter oder Schwebstofffilter ist.

Die Filtervorrichtung bildet insbesondere eine als Ganzes handhabbare Einheit, welche in Art einer Kassette an der Saugmaschine einsetzbar ist und von dieser abnehmbar ist. Insbesondere ist es dabei vorgesehen, dass die Kennzeichnung lesbar ist, wenn die Filtervorrichtung an der Saugmaschine an einem Filterhalter gehalten ist.

Bei einer Ausführungsform ist das Filter als Faltenfilter ausgebildet und insbesondere als Flachfaltenfilter ausgebildet. Es lässt sich so eine große Durchströmungsfläche und damit eine effektive Filterwirkung bereitstellen.

Bei einer Ausführungsform ist das Filter als Zickzack-Faltung ausgebildet. Es lässt sich so eine große Durchströmungsfläche für einen Saugstrom mit effektiver Filterwirkung bereitstellen.

Bei einer Ausführungsform ist das Filter hängend an dem Rahmen positioniert und insbesondere sind Filterfalten hängend an dem Rahmen positioniert. Dadurch ergibt sich ein einfacher und materialsparender Aufbau. Der Rahmen dient sowohl zum Halten der Filterfalten als auch zum Halten der Filtervorrichtung an einer Saugmaschine an einem entsprechenden Filterhalter der Saugmaschine.

Ganz besonders vorteilhaft ist es, wenn die Kennzeichnung an einem oder mehreren Falzbereichen angeordnet oder gebildet oder gehalten ist. Falzbereiche sind diejenigen Bereiche, über welche Filterfalten gebildet sind. Bei einer Filtervorrichtung sind die Falzbereiche insbesondere nicht als scharfe Kanten ausgebildet, sondern weisen eine gewisse Breitenausdehnung auf. Diese Breitenausdehnung kann dazu genutzt werden, die Kennzeichnung direkt an den Falzbereichen anzuordnen (beispielsweise durch Bedrucken). Die Falzbereiche können auch dazu dienen, um beispielsweise ein Etikett mit der Kennzeichnung zu halten.

Es ist mindestens ein Etikett und insbesondere genau ein Etikett vorgesehen, welches mindestens teilweise mit der Kennzeichnung versehen ist (und insbesondere mit der vollständigen Kennzeichnung versehen ist) und welches an der Reinseite des Filters sitzt. Es lässt sich so auf einfache Weise die Filtervorrichtung als Ganzes mit der Kennzeichnung versehen. Es lässt sich zunächst die Filtervorrichtung auf einfache Weise ohne das mindestens eine Etikett herstellen, wobei sich dann das Etikett nachträglich an der Reinseite des Filters fixieren lässt. Es ergibt sich eine einfache Lesbarkeit der Kennzeichnung auf dem mindestens einen Etikett.

Das mindestens eine Etikett ist stoffschlüssig und insbesondere adhäsiv mit dem Filter verbunden. Es lässt sich so auf einfache Weise nachträglich das Etikett mit dem Filter verbinden. Beispielsweise ist das Etikett selbstklebend und es lässt sich auf das Filter aufsetzen, bzw. das Filter wird mit Klebstoff versehen und das Etikett aufgesetzt.

Das mindestens eine Etikett ist mit Falzbereichen des Filters adhäsiv verbunden. Durch Falzbereiche ist eine entsprechende Fläche des Filters bereitgestellt, an welcher das mindestens eine Etikett fixierbar ist und dabei an der Reinseite des Filters positionierbar ist.

Bei einer Ausführungsform ist es vorgesehen, dass der Rahmen einen Innenraum aufweist, welcher von einer Leisteneinrichtung des Rahmens umschlossen ist, und dass das mindestens eine Etikett in dem Innenraum positioniert ist. Es ergibt sich so ein einfacher Aufbau. Es lässt sich dadurch auf einfache Weise sicherstellen, dass das mindestens eine Etikett nicht über eine Oberfläche der Filtervorrichtung hinausragt. Insbesondere lässt sich das Etikett vertieft anordnen. Es lässt sich dadurch gewährleisten, dass das mindestens eine Etikett nicht "störend" für die Positionierung der Filtervorrichtung ist.

Bei einer vorteilhaften Ausführungsform ist es vorgesehen, dass das mindestens eine Etikett so mit dem Filter verbunden ist, dass bei Überschreiten einer bestimmten Ablösekraft das mindestens eine Etikett von einem Bediener von dem Filter lösbar ist. Es kann dann ein Bediener ohne Zerstörung des Filters das Etikett abnehmen, wenn dies gewünscht ist.

Bei einer vorteilhaften Ausführungsform ist das mindestens eine Etikett so mit dem Filter verbunden, dass eine Ablösekraft (zum Ablösen des mindestens einen Etiketts) mindestens 8 N, insbesondere mindestens 9 N und insbesondere mindestens 9,9 N beträgt und beispielsweise mindestens näherungsweise 10 N beträgt. Es lässt sich dadurch einerseits eine sichere Fixierung wie beispielsweise eine Klebefixierung des mindestens einen Etiketts an dem Filter erreichen. Andererseits lässt sich, wenn dies gewünscht ist, durch einen Bediener das mindestens eine Etikett ablösen.

Es hat sich als günstig erwiesen, wenn ein Klebematerial für eine stoffschlüssige Verbindung des mindestens einen Etiketts mit dem Filter eine Lebensdauer von mindestens 100 h bezogen auf eine Betriebsdauer der Saugmaschine aufweist. Es lässt sich dadurch eine nicht gewünschte Ablösung des mindestens einen Etiketts von dem Filter (von dem Filtermaterial) verhindern.

Das Filter weist eine erste Seite zu dem Rahmen hin und eine der ersten Seite gegenüberliegende zweite Seite zu dem Rahmen hin auf, und das mindestens eine Etikett ist an der ersten Seite angeordnet oder ist in einem Abstand von höchstens 10 % einer Länge zwischen der ersten Seite und der zweiten Seite zu einer Kante der ersten Seite (wobei die Kante zu dem Rahmen hin liegt) beabstandet an der Reinseite des Filters angeordnet. Dadurch ist das mindestens eine Etikett in einem Bereich des Filters angeordnet, welcher bei Bewegung des Filters geringere "Ausschläge" erfährt. Beispielsweise bewegt ein Bediener das Filter (das Filtermaterial) für eine Reinigung. In einem mittigen Bereich des Filters sind stärkere Bewegungen möglich als in der Nähe der Kante der ersten Seite. Durch die Anordnung des mindestens einen Etiketts an oder in der Nähe der Kante der ersten Seite lässt sich ein unbeabsichtigtes Ablösen des mindestens einen Etiketts besser verhindern.

Bei einer Ausführungsform ist das mindestens eine Etikett an der Kante der ersten Seite positioniert und es liegt insbesondere eine Kante des mindestens einen Etiketts mindestens näherungsweise an der Kante der ersten Seite und ist vorzugsweise fluchtend mit der ersten Kante ausgerichtet bzw. die Kante der ersten Seite und die entsprechende Kante des mindestens einen Etiketts sind kollinear ausgerichtet. Es ergibt sich dadurch eine effektive Ablöseverhinderung bei Bewegungen des Filters.

Bei einer Ausführungsform sind die erste Seite und die zweite Seite parallel ausgerichtet. Insbesondere weist dann der Rahmen einen rechteckigen, quadratischen oder trapezförmigen Querschnitt auf.

Bei einer Ausführungsform weist das Filter eine dritte Seite zu dem Rahmen hin und eine vierte Seite zu dem Rahmen hin auf, wobei die vierte Seite beabstandet zu der dritten Seite ist, die dritte Seite quer zu der ersten Seite orientiert ist, und die vierte Seite quer zu der ersten Seite orientiert ist. Insbesondere hat dann der Rahmen eine rechteckige, quadratische oder trapezförmige Gestalt.

Es kann dann vorgesehen sein, dass die dritte Seite und die vierte Seite parallel zueinander ausgerichtet sind und insbesondere dass die dritte Seite und die vierte Seite jeweils senkrecht zu der ersten Seite orientiert sind. Vorzugsweise hat dann der Rahmen eine rechteckige oder quadratische Gestalt. Bei einer rechteckigen Gestalt ist es dann insbesondere vorgesehen, dass das mindestens eine Etikett an oder in der Nähe einer Kante der ersten Seite positioniert ist, wobei die erste Seite eine kürzere Seite für die rechteckförmige Gestalt ist.

Es kann vorgesehen sein, dass das mindestens eine Etikett beabstandet zu der dritten Seite und/oder beabstandet zu der vierten Seite angeordnet ist. Es ergibt sich so eine optimierte Platzierung insbesondere bezüglich Bewegungen des Filters.

Es ist auch möglich, dass das mindestens eine Etikett in einem Eckbereich zwischen der ersten Seite und der dritten Seite positioniert ist.

Bei einer Ausführungsform ist es vorgesehen, dass das Filter einen Abreinigungsbereich zur Beaufschlagung durch eine Abreinigungseinrichtung der Saugmaschine aufweist, und dass das mindestens eine Etikett beabstandet zu dem Abreinigungsbereich positioniert ist. Über den Abreinigungsbereich wirkt die Abreinigungseinrichtung direkt oder indirekt auf das Filter. Beispielsweise wird der Abreinigungsbereich mit einem Luftstrom beaufschlagt, oder der Abreinigungsbereich erfährt eine direkte mechanische Einwirkung. Durch eine beabstandete Positionierung des mindestens einen Etiketts zu dem Abreinigungsbereich behindert das mindestens eine Etikett die Abreinigung des Filters beim Betrieb der Saugmaschine nicht.

Es hat sich als günstig erwiesen, wenn das mindestens eine Etikett eine erste Fläche aufweist und das Filter eine zweite Fläche aufweist, welche eine Durchströmungsfläche für einen Saugstrom ist, wobei das Verhältnis der zweiten Fläche zu der ersten Fläche bei mindestens 50, insbesondere bei mindestens 70 und insbesondere bei mindestens 90 liegt. Die erste Fläche des mindestens einen Etiketts definiert, wie groß die Kennzeichnung auf dem mindestens einen Etikett sein kann. Je größer die erste Fläche, umso mehr Informationen (zumindest optisch auslesbare Informationen) lassen sich an dem Etikett anordnen. Die zweite Fläche definiert die Durchströmungsfläche für den Saugstrom. Das genannte Verhältnis sollte nicht zu klein sein; wenn die erste Fläche zu groß ist, dann kann dadurch die Durchströmung des Filters behindert werden. Dies kann Auswirkungen auf den Druckverlust des Filters haben und auf weitere technische Daten wie den maximalen Volumenstrom. Es könnte sich eine zu große erste Fläche auch auf die Abreinigbarkeit des Filters bei einem Abreinigungsverfahren beispielsweise mittels Rückspülung negativ auswirken.

Es hat sich weiterhin als günstig erwiesen, wenn das Verhältnis der zweiten Fläche zu der ersten Fläche bei höchstens 150, insbesondere bei höchstens 130 und insbesondere bei höchstens 110 liegt. Wenn die erste Fläche zu klein ist, dann ist unter Umständen der Flächenbereich, über welchen das mindestens eine Etikett mit dem Filter fixierbar ist, zu klein und das mindestens eine Etikett löst sich zu leicht ab. Es hat sich gezeigt, dass bei den genannten Verhältnisangaben eine sichere Fixierung und insbesondere Klebefixierung des mindestens einen Etiketts mit dem Filtermaterial und insbesondere mit Falzbereichen des Filters erreichbar ist.

Insbesondere ist es günstig, wenn das Verhältnis der zweiten Fläche zu der ersten Fläche im Bereich zwischen 90 und 110 und insbesondere im Bereich zwischen 95 und 115 und insbesondere bei mindestens näherungsweise 100 liegt. Es ergibt sich so ein Optimum zwischen ausreichend großer Labelfläche (erster Fläche) des mindestens einen Etiketts mit geringer Gefahr der Ablösung, ohne dass Durchströmeigenschaften der Filtervorrichtung auf signifikante Weise verschlechtert werden.

Bei einer Ausführungsform ist es vorgesehen, dass das mindestens eine Etikett bedruckt ist und/oder mit einem Datenträger versehen ist. Insbesondere lässt sich das Etikett mit optisch auslesbaren Daten wie einer Farbcodierung oder anderen Codierung und/oder mit alphanumerischen Informationen versehen. Es ist dabei grundsätzlich eine maschinenlesbare Form möglich. Durch das Versehen mit einem Datenträger können entsprechende Informationen berührungslos durch ein Lesegerät ausgelesen werden, welches beispielsweise keinen direkten optischen Kontakt mit dem Datenträger hat.

Die Kennzeichnung ist mindestens teilweise in einer für einen Bediener erkennbaren optischen Form. Beispielsweise ist eine Farbcodierung vorgesehen und/oder es sind alphanumerische Zeichen vorgesehen. Ein Bediener kann dann auf einfache Weise der Kennzeichnung die notwendigen Informationen entnehmen.

Es ist günstig, wenn die Kennzeichnung mindestens teilweise maschinenlesbar ist. Dadurch ist eine automatische Verarbeitung möglich.

Bei einer Ausführungsform enthält die Kennzeichnung Informationen über die Filtervorrichtung als Ganzes und/oder den Filter. Beispielsweise ist die Kennzeichnung so ausgebildet, dass Informationen enthalten sind, mit welcher Art von Saugmaschine die Filtervorrichtung verwendbar ist.

Erfindungsgemäß wird eine Saugmaschine bereitgestellt, welche mit mindestens einer erfindungsgemäßen Filtervorrichtung versehen ist.

Insbesondere ist ein Filterhalter vorgesehen, an welchem die mindestens eine Filtervorrichtung entnehmbar gehalten ist.

Die nachfolgende Beschreibung bevorzugter Ausführungsformen dient im Zusammenhang mit den Zeichnungen der näheren Erläuterung der Erfindung.

Es zeigen:
- Figur 1: eine perspektivische Darstellung eines Ausführungsbeispiels einer erfindungsgemäßen Filtervorrichtung mit einer Kennzeichnung an einem Etikett, wobei ein Filter als Flachfaltenfilter ausgebildet ist (es sind Filterfalten angedeutet);
- Figur 2: eine Draufsicht auf die Filtervorrichtung gemäß Figur 1 (wobei Filterfalten nicht gezeigt sind); und
- Figur 3: eine schematische Darstellung eines Ausführungsbeispiels einer Saugmaschine als stand-alone-Staubsauger, welcher mit einer erfindungsgemäßen Filtervorrichtung versehen ist.

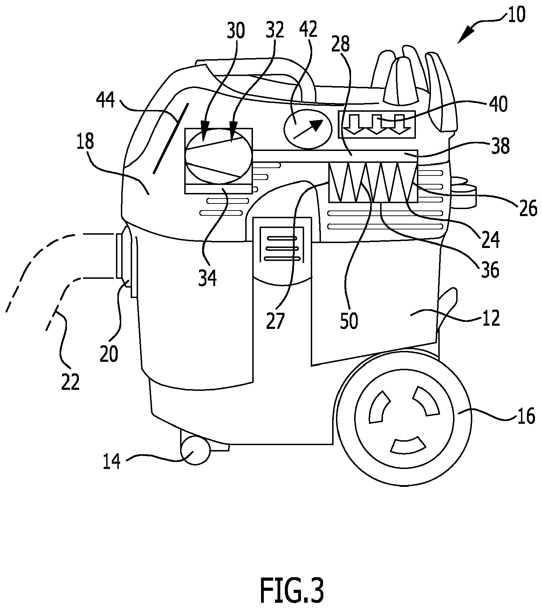

Ein Ausführungsbeispiel einer Saugmaschine 10 ist ein Staubsauger als stand-alone-Gerät (Figur 3). Diese Saugmaschine 10 weist einen Schmutzsammelbehälter 12 auf. Es ist vorgesehen, dass der Schmutzsammelbehälter 12 und damit die Saugmaschine 10 als Ganzes fahrbar auf einer Unterlage über eine Lenkrolle 14 und eine Radeinrichtung 16 aufstellbar ist.

Auf den Schmutzsammelbehälter 12 ist ein lösbarer Saugkopf 18 aufgesetzt.

Beispielsweise ist an dem Schmutzsammelbehälter 12 ein Saugeinlass 20 angeordnet. Bei einer alternativen Ausführungsform ist der Saugeinlass 20 an dem Saugkopf 18 angeordnet. An diesen Saugeinlass 20 ist ein Saugschlauch 22 anschließbar; in einem Saugbetrieb der Saugmaschine 10 wird über einen angeschlossenen Saugschlauch 22 (an dem gegebenenfalls noch eine Düse sitzt) Sauggut eingesaugt.

Der Saugkopf 18, wenn er an dem Schmutzsammelbehälter 12 sitzt, dichtet diesen oberseitig ab. Er weist einen Saugauslass 24 auf, an dem (mindestens) eine Filtervorrichtung 26 mit (mindestens) einem Filter 50 an einem Filterhalter 27 positioniert ist. Der Filterhalter 27 ist beispielsweise umgreifend oder als Grundplatte ausgebildet.

An die Filtervorrichtung 26 schließt sich (mindestens) eine Absaugleitung 28 an. Die Absaugleitung 28 führt zu einem Saugaggregat 30. Das Saugaggregat 30 umfasst eine Gebläseeinrichtung 32 mit (mindestens) einem Gebläserad und einem Antriebsmotor 34 zum motorischen Antrieb des Gebläserads der Gebläseeinrichtung 32. Der Antriebsmotor 34 ist insbesondere ein Elektromotor, wie beispielsweise ein Universalmotor.

Die Absaugleitung 28 und das Saugaggregat 30 sind in dem Saugkopf 18 angeordnet.

Bei der beschriebenen Ausführungsform ist die Filtervorrichtung 26 in dem Saugkopf 18 angeordnet.

Es ist grundsätzlich auch möglich, dass die Filtervorrichtung 26 an dem Schmutzsammelbehälter 12 angeordnet ist.

Das Saugaggregat 30 erzeugt über die Gebläseeinrichtung 32 einen Saugstrom, welcher über die Absaugleitung 28 auf den Schmutzsammelbehälter 12 und auf den Saugeinlass 20 wirkt. Die Filtervorrichtung 26 wird im Saugstrombetrieb des Sauggeräts 10 mit dem Saugstrom durchströmt. Unter der Wirkung des Saugstroms tritt mit Schmutzpartikeln beladene Luft über den Saugeinlass 20 in den Schmutzsammelbehälter 12 ein und die Partikel können in dem Schmutzsammelbehälter 12 gesammelt werden. Die Filtervorrichtung 26 mit dem Filter 50 filtert Schmutzpartikel aus. Sie weist dementsprechend an dem Filter 50 eine Schmutzseite 36 auf, welche dem Schmutzsammelbehälter 12 zugewandt ist, und weist eine Reinseite 38 auf, an welche die Absaugleitung 28 angeschlossen ist.

(Gereinigte) Saugluft kann vom Saugaggregat 30 über Abluftöffnungen an die Umgebung abgegeben werden.

Bei einem Ausführungsbeispiel ist der Filtervorrichtung 26 eine Abreinigungseinrichtung 40 zugeordnet. Die Abreinigungseinrichtung 40 ist in dem Saugkopf 18 so angeordnet, dass durch sie die Filtervorrichtung 26 für einen Abreinigungsvorgang beaufschlagbar ist. An dem Filter der Filtervorrichtung 26 lagern sich Feststoffpartikel ab. Über die Abreinigungseinrichtung 40 lassen sich solche Feststoffpartikel lösen, um die Filterwirkung der Filtervorrichtung 26 zu verbessern.

Bei einem Ausführungsbeispiel ist die Abreinigungseinrichtung 40 eine Fremdluftventileinrichtung, welche die Filtereinrichtung 26 mit Luftstößen beaufschlagt, um einen Abreinigungseffekt zu erzielen.

Die Filtervorrichtung 26 ist grundsätzlich von dem Filterhalter 27 und damit von der Saugmaschine 10 entnehmbar, um beispielsweise einen Filteraustausch zu ermöglichen.

Wenn die Filtervorrichtung 26 an dem Sauggerät 10 eingesetzt ist, das heißt bei dem beschriebenen Ausführungsbeispiel an dem Saugkopf 18 eingesetzt ist, und der Saugkopf 18 an dem Schmutzsammelbehälter 12 positioniert ist und insbesondere mit diesem verriegelt ist, dann hat die Filtervorrichtung 26 eine Dichtfunktion; der Saugstrom kann nur durch Filtermaterial des Filters der Filtervorrichtung 26 von dem Schmutzsammelbehälter 12 in die Absaugleitung 28 strömen.

Bei dem in Figur 3 gezeigten Ausführungsbeispiel ist eine Filtervorrichtung 26 mit einem einzigen Typ von Filter 50 vorgesehen. Es ist grundsätzlich auch möglich, dass mehrere unterschiedliche Filtervorrichtungen und/oder mehrere unterschiedliche Filter vorhanden sind; in der internationalen Anmeldung PCT/EP2017/067629 vom 12. Juli 2017 ist ein Sauggerät beschrieben, welches ein erstes Filter und ein zweites Filter mit unterschiedlicher Filterwirkung aufweist. Auf dieses Dokument wird ausdrücklich Bezug genommen.

In diesem Dokument ist auch die Funktionsweise einer Fremdluftventileinrichtung als Abreinigungseinrichtung beschrieben. In dieser Hinsicht wird ebenfalls auf das genannte Dokument Bezug genommen.

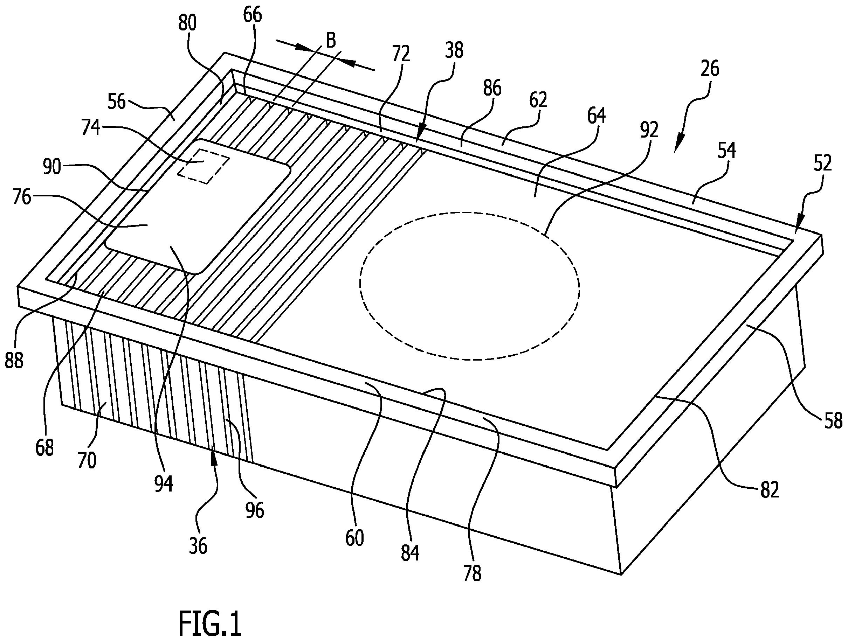

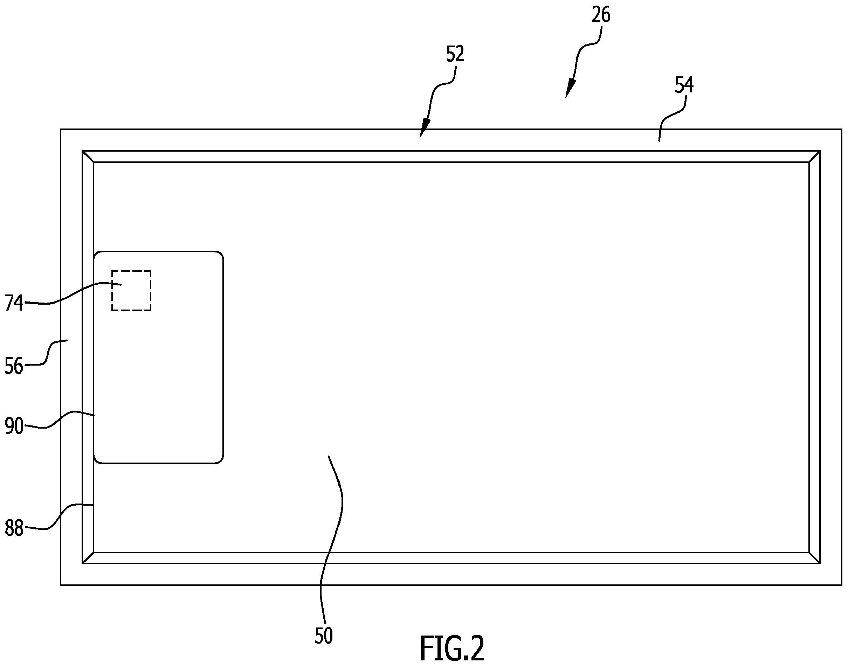

Ein Ausführungsbeispiel einer Filtervorrichtung 26 (Figuren 1, 2) umfasst einen Rahmen 52. Der Rahmen 52 weist eine Leisteneinrichtung 54 auf. Die Leisteneinrichtung 54 wiederum umfasst eine erste Leiste 56 und eine dieser gegenüberliegende zweite Leiste 58, wobei die zweite Leiste 58 beabstandet zu der ersten Leiste 56 ist.

Bei dem gezeigten Ausführungsbeispiel sind die erste Leiste 56 und die zweite Leiste 58 parallel zueinander ausgerichtet.

Die Leisteneinrichtung umfasst ferner eine dritte Leiste 60 und eine vierte Leiste 62. Die vierte Leiste 62 ist der dritten Leiste 60 gegenüberliegend, wobei die vierte Leiste 62 beabstandet zu der dritten Leiste 60 ist.

Die dritte Leiste 60 und die vierte Leiste 62 sind jeweils quer zu der ersten Leiste 56 und jeweils quer zu der zweiten Leiste 58 orientiert. Bei dem gezeigten Ausführungsbeispiel sind die dritte Leiste 60 und die vierte Leiste 62 jeweils senkrecht zu der ersten Leiste 56 und jeweils senkrecht zu der zweiten Leiste 58 orientiert.

Die dritte Leiste 60 ist mit der ersten Leiste 56 und der zweiten Leiste 58 verbunden. Weiterhin ist die vierte Leiste 62 mit der ersten Leiste 56 und der zweiten Leiste 58 verbunden.

Die Leisteneinrichtung 54 ist bei einem Ausführungsbeispiel einstückig ausgebildet. Sie kann auch aus mehreren Einzelteilen zusammengesetzt sein, welche dann nachträglich miteinander verbunden sind.

Die Leisteneinrichtung 54 ist beispielsweise aus einem Kunststoffmaterial hergestellt.

Bei dem gezeigten Ausführungsbeispiel ist die Leisteneinrichtung 54 zumindest näherungsweise rechteckförmig. Die erste Leiste 56 und die zweite Leiste 58 haben eine gleiche erste Länge. Die dritte Leiste 60 und die vierte Leiste 62 haben eine gleiche zweite Länge, wobei die zweite Länge größer ist als die erste Länge.

Es sind auch andere Formen des Rahmens 52 angepasst an eine spezielle Saugmaschine 10 möglich.

Der Rahmen 52 weist einen Innenraum 64 auf, welcher von der Leisteneinrichtung 54 umgeben bzw. umschlossen ist. Die Leisteneinrichtung 54 bildet eine Begrenzungswandung für den Innenraum 64.

Der Rahmen 52 dient dazu, die Filtervorrichtung 26 an dem Filterhalter 27 der Saugmaschine 10 zu halten. Weiterhin hält der Rahmen 52 das Filter 50. Er hält das Filter 50 dabei derart, und der Rahmen 52 ist derart ausgebildet, dass die Filtervorrichtung 26, wenn sie an dem Filterhalter 27 eingesetzt ist, die oben beschriebene Dichtfunktion aufweist.

Das Filter 50 ist aus einem Filtermaterial hergestellt, welches eine Filterwirkung für Schmutzpartikel hat. Das Filtermaterial ist beispielsweise ein Zellulosematerial oder ein Polyestermaterial.

Bei einem Ausführungsbeispiel ist das Filter 50 durch ein Oberflächenfiltermedium gebildet. Ein Oberflächenfiltermedium nimmt an seiner Oberfläche Schmutzpartikel auf.

Es ist grundsätzlich auch möglich, dass das Filter 50 als Tiefenfilter oder Schwebstofffilter ausgebildet ist.

Bei der gezeigten Ausführungsform (Figuren 1, 2) ist die Filtervorrichtung 26 als Faltenfilter und insbesondere Flachfaltenfilter ausgebildet. Das Filter 50 umfasst eine Mehrzahl von Filterfalten 66. Diese Filterfalten 66 sind insbesondere in einer Zickzack-Faltung angeordnet; die entsprechenden Filterfalten 66 sind parallel zueinander angeordnet.

Das Filter 50 weist Falzbereiche 68 auf, welche im Bereich des Rahmens 52 und bei einem Ausführungsbeispiel in dem Innenraum 64 liegen.

Üblicherweise sind die Filterfalten 66 so ausgebildet, dass die Falzbereiche 68 nicht als Kante ausgebildet sind, sondern eine Breite B aufweisen, welche insbesondere in der Millimeter-Größenordnung liegt und beispielsweise bei ca. 5 mm liegt.

Die Filterfalten 66 sind an dem Rahmen 52 und dabei der Leisteneinrichtung 54 fixiert und insbesondere hängend fixiert. Das entsprechende Filtermaterial des Filters 50 hängt an dem Rahmen 52 und hängt gewissermaßen "an diesem herunter".

Die Filtervorrichtung 26 weist wie oben erwähnt die Schmutzseite 36 und die Reinseite 38 auf. Es ist insbesondere vorgesehen, dass die Falzbereiche 68, welche einen Teil der Reinseite 38 bilden, in dem Innenraum 64 des Rahmens 52 liegen.

Die Filterfalten 66 weisen eine Außenseite 70 auf, welche die Schmutzseite 36 ausbildet, und weisen eine Innenseite 72 auf, welche die Reinseite 38 ausbildet.

Die Filtervorrichtung 26 ist mit einer Kennzeichnung 74 versehen, welche an der Reinseite 38 des Filters 50 angeordnet bzw. gebildet ist.

Bei einer Ausführungsform ist die Kennzeichnung 74 beispielsweise an Falzbereichen 68 gebildet; an den Falzbereichen 68 kann beispielsweise eine entsprechende Kennzeichnung in Form von grafischen Elementen angeordnet sein. Beispielsweise sind ein oder mehrere Falzbereiche 68 bedruckt.

Bei einer vorteilhaften Ausführungsform (Figuren 1, 2) ist die Kennzeichnung 74 an einem Etikett 76 (Label) angeordnet bzw. gebildet, wobei das Etikett 76 an der Reinseite 38 des Filters 50 und dabei an dem Filtermedium positioniert ist.

Es ist insbesondere vorgesehen, dass das Etikett 76 stoffschlüssig mit dem Filter 50 an der Reinseite 38 des Filters 50 verbunden ist und insbesondere adhäsiv über eine Klebeverbindung mit dem Filter 50 verbunden ist.

Bei einer vorteilhaften Ausführungsform ist das Etikett 76 adhäsiv mit Falzbereichen 68 an der Reinseite 38 des Filters 50 verbunden.

Es ist insbesondere vorgesehen, dass das Etikett 76 in dem Innenraum 64 angeordnet ist und vorzugsweise bezüglich einer Oberseite 78 des Rahmens 52 zurückgesetzt in dem Innenraum 64 positioniert ist. Das Etikett 76 ragt dadurch nicht über eine Oberseite der Filtervorrichtung 26 (ohne Etikett) hinaus.

Es ist grundsätzlich möglich, dass das Etikett 76 selbstklebend ausgebildet ist und bei der Herstellung der Filtervorrichtung 26 an dem Filter 50 durch Aufsetzen fixiert wird.

Alternativ oder zusätzlich ist es möglich, dass an derjenigen Stelle, an der das Etikett 76 positioniert werden soll, entsprechende Falzbereiche 68 mit adhäsivem Material versehen werden, um das Etikett 76 klebend an dem Filter 50 zu fixieren.

Es ist auch möglich, dass Bereiche des Etiketts 76, welche mit Falzbereichen 68 korrespondieren, mit adhäsivem Material versehen werden.

Das Etikett 76 ist beispielsweise aus einem Papiermaterial oder Kunststoffmaterial hergestellt. Es ist grundsätzlich auch möglich, dass das Etikett 76 beispielsweise aus einem Metallmaterial und insbesondere aus einem Blech hergestellt ist.

Die Kennzeichnung 74 an dem Etikett 76 ist derart ausgebildet, dass sie durch einen Bediener optisch lesbar ist. Beispielsweise ist mindestens teilweise die Kennzeichnung 74 eine Farbcodierung. Über die Farbcodierung lässt sich für einen Bediener auf einfache Weise ein geeignetes Filter für die spezifische Saugmaschine 10 wählen. Alternativ oder zusätzlich kann es vorgesehen sein, dass die Kennzeichnung 74 andere Arten der Codierung wie beispielsweise einen QR-Code enthält. Es ist weiterhin alternativ oder zusätzlich möglich, dass die Kennzeichnung 74 eine alphanumerische Beschriftung enthält.

Weiterhin ist es möglich, dass die Kennzeichnung 74 maschinenlesbar ist und beispielsweise an einem Datenträger realisiert ist, welcher an dem Etikett 76 sitzt. Beispielsweise sitzt an dem Etikett 76 ein RFID-Element oder das Etikett 76 ist als ein RFID-Element ausgebildet.

Das Filter 50 hat zu dem Rahmen 52 hin eine erste Seite 80 und eine der ersten Seite gegenüberliegende und zu dieser beabstandete zweite Seite 82. Es hat ferner eine dritte Seite 84 und eine der dritten Seite 84 gegenüberliegende vierte Seite 86, wobei die vierte Seite 86 beabstandet zu der dritten Seite 84 ist. Die dritte Seite 84 und die vierte Seite 86 sind jeweils zu der ersten Seite 80 quer und insbesondere senkrecht orientiert und ferner jeweils zu der zweiten Seite 82 quer und insbesondere senkrecht orientiert. Die erste Seite 80, zweite Seite 82, dritte Seite 84, vierte Seite 86 des Filters 50 sind angepasst an die Ausbildung der Leisteneinrichtung 54 mit der ersten Leiste 56, der zweiten Leiste 58, der dritten Leiste 60 und der vierten Leiste 62. Die erste Seite 80 des Filters 50 ist der ersten Leiste 56 zugewandt, die zweite Seite 82 der zweiten Leiste 58, die dritte Seite 84 der dritten Leiste 60 und die vierte Seite 86 der vierten Leiste 62. Insbesondere berühren die jeweiligen Seiten 80, 84, 84, 86 die Leisteneinrichtung 54.

Das Filter 50 weist an der ersten Seite 80 dem Rahmen 52 zugewandt eine Kante 88 auf. Eine Kante 90 des Etiketts 76 liegt an der Kante 88 des Filter 50 oder ist höchstens in einem Abstand zu dieser Kante 88 des Filters 50 beabstandet, welcher kleiner ist als 10 % eines Abstands zwischen der ersten Seite 80 und der zweiten Seite 82 des Filters 50.

Bei dem gezeigten Ausführungsbeispiel liegen die Kante 88 des Filters 50 und die Kante 90 des Etiketts 76 aneinander.

Es ist insbesondere vorgesehen, dass das Etikett 76 nicht mit dem Rahmen 52 verbunden ist.

Grundsätzlich ist es möglich, dass das Filter 50 an einem Eckbereich der ersten Seite 80 zu der dritten Seite 84 liegt (bzw. in einer dazu äquivalenten Anordnung an einem Eckbereich der ersten Seite 80 zu der vierten Seite 86).

Bei dem gezeigten Ausführungsbeispiel ist das Etikett 76 beabstandet zu der dritten Seite 84 und der vierten Seite 86 und insbesondere mindestens näherungsweise bezogen auf die dritte Seite 84 und die vierte Seite 86 mittig an dem Filter 50 angeordnet.

Das Filter 50 weist bei einem Ausführungsbeispiel einen Abreinigungsbereich 92 auf. An diesem Abreinigungsbereich 92 wirkt die Abreinigungseinrichtung 40 im Betrieb der Saugmaschine 10 auf die Filtervorrichtung 26. Beispielsweise erfolgt dort ein direkter mechanischer Angriff, oder insbesondere, wenn die Abreinigungseinrichtung 40 als Fremdluftventileinrichtung ausgebildet ist, wirkt ein Luftstrom zur Abreinigung des Filters 50 an dem Abreinigungsbereich 92 auf das Filter 50.

Das Etikett 76 ist so an der Reinseite 38 des Filters 50 positioniert, dass es außerhalb dieses Abreinigungsbereichs 92 liegt und dabei beabstandet zu diesem ist. Dadurch wird eine Abreinigungsfunktion der Saugmaschine 10 durch die Kennzeichnung 74 nicht behindert.

Durch die Positionierung des Etiketts 90 an der Kante 88 des Filters 50 lassen sich die Belastungen des Etiketts 76 durch Bewegung des Filters 50 (beispielsweise beim Reinigen durch einen Bediener) gering halten. Wenn der Abreinigungsbereich 92 mittig an dem Filter 50 ist, was für die Erzielung eines optimierten Abreinigungsergebnisses vorteilhaft ist, ist eine seitliche Position des Etiketts 76 und insbesondere an oder in der Nähe der Kante 88 ebenfalls vorteilhaft, ohne dass der Abreinigungsvorgang negativ beeinflusst wird.

Das Etikett hat eine erste Fläche 94. Die erste Fläche 94 entspricht im Wesentlichen einer Oberfläche des Etiketts 76 an der Reinseite 38. Die Kennzeichnung 74, insbesondere wenn sie optisch lesbar ist, ist an der ersten Fläche 94 angeordnet.

Eine der ersten Fläche 94 gegenüberliegende Fläche des Etiketts 76 dient mindestens teilweise zur stoffschlüssigen Verbindung des Etiketts 76 mit dem Filter 50.

Das Filter 50 hat eine zweite Fläche 96, welche eine Durchströmfläche für einen Saugstrom ist. Bei dem Ausführungsbeispiel eines Faltenfilters und insbesondere Flachfaltenfilters setzt sich die zweite Fläche 96 aus den jeweiligen Einzelflächen der Filterfalten 66 an der Schmutzseite 36 zusammen.

Bei einem konkreten Ausführungsbeispiel liegt die zweite Fläche (Durchströmungsfläche für den Saugstrom) des Filters 50 bei ca. 2640 cm².

Die erste Fläche 94 und damit die Größe des Etiketts 76 ist bezogen auf die zweite Fläche 96 (Durchströmungsfläche des Filters 50) auf spezifische Weise gewählt. Die erste Fläche 94 sollte so groß sein, dass eine effektive Klebefläche zur stoffschlüssigen Verbindung des Etiketts 76 mit dem Filter 50 und insbesondere den Falzbereichen 68 erreicht ist. Andererseits sollte die erste Fläche 94 nicht so groß sein, dass das Etikett 76 signifikante Auswirkungen auf die durchströmbare Fläche des Filters 50 hat und insbesondere auf den Druckverlust des Filters 50 und auf weitere technische Daten wie den maximalen Volumenstrom der Saugmaschine 10 hat. Weiterhin sollte trotz Etikett 76 eine Abreinigbarkeit des Filters 50 insbesondere durch Rückspülung möglich sein.

Es hat sich gezeigt, dass es vorteilhaft ist, wenn das Verhältnis der zweiten Fläche 96 (Durchströmungsfläche des Filters 50) zu der ersten Fläche 94 (Fläche des Etiketts 76) bei mindestens 50, vorzugsweise bei mindestens 70 und insbesondere vorzugsweise bei mindestens 90 liegt.

Es hat sich ferner als günstig erwiesen, wenn das Verhältnis der zweiten Fläche 96 zu der erste Fläche 94 bei höchstens 150, insbesondere bei höchstens 130 und vorzugsweise bei höchstens 110 liegt.

Beispielsweise liegt das Verhältnis der zweiten Fläche zu der ersten Fläche im Bereich zwischen 90 und 110 und insbesondere im Bereich zwischen 95 und 115.

Bei einem konkreten Ausführungsbeispiel liegt das Verhältnis der zweiten Fläche 96 zu der ersten Fläche 94 bei ca. 100.

Bei einem konkreten Ausführungsbeispiel, bei dem die zweite Fläche 96 bei 2640 cm² liegt, liegt die erste Fläche 94 bei 26 cm².

Die Verbindung des Etiketts 76 mit dem Filter 50 ist so, dass beim Betrieb der Saugmaschine 10 sich das Etikett 76 nicht von der Filtervorrichtung 26 ablöst. Es ist vorzugsweise vorgesehen, dass ein Bediener bei Ausübung einer entsprechend hohen Ablösekraft das Etikett 76 von dem Filter 50 ohne Beschädigung des Filters 50 entnehmen kann.

Das Klebematerial zur adhäsiven Verbindung des Etiketts 76 mit dem Filter 50 ist vorzugsweise so gewählt, dass eine Lebensdauer von mindestens 100 Stunden (bezogen auf eine Betriebsdauer der Saugmaschine 10) vorliegt.

Bei einer Ausführungsform ist es vorgesehen, dass eine Ablösekraft für einen Bediener zur Ablösung des Etiketts 76 von dem Filter 50 mindestens 8 N, vorzugsweise mindestens 9 N und mindestens 9,9 N beträgt.

Bei einem konkreten Ausführungsbeispiel beträgt die Ablösekraft ungefähr 10 N.

Die Filtervorrichtung 26 funktioniert wie folgt:
An der Reinseite 38 der Filtervorrichtung 26 und dabei an dem Filter 50, d. h. an Filtermaterial, ist die Kennzeichnung 74 angeordnet.

Bei einem Ausführungsbeispiel ist die Kennzeichnung 74 an einem Etikett 76 gebildet bzw. angeordnet, und das Etikett 76 ist an dem Filter 50 positioniert und mit diesem verbunden; insbesondere ist die Verbindung adhäsiv.

Das Etikett 76 ist vorzugsweise an der Kante 90 des Filters 50 angeordnet. Es ist insbesondere an der Kante 90 einer schmalen Seite 80 (bzw. äquivalent dazu 82) angeordnet. Dadurch erfährt das Etikett 76 weniger Belastungen bei Bewegung des Filters 50. Ferner wird, wenn eine Abreinigung vorgesehen ist, der Abreinigungsvorgang nicht verschlechtert; das Etikett 76 ist beabstandet zu dem Abreinigungsbereich 92 angeordnet.

Weiterhin ist das Etikett 76 bezogen auf seine Fläche 94 so ausgebildet, dass einerseits eine genügend große Verbindungsfläche und insbesondere Klebefläche mit dem Filter 50 erreicht ist, und andererseits so klein ausgebildet, dass eine Durchströmung des Filters 50 durch einen Saugstrom durch das Etikett 76 nicht signifikant beeinflusst wird und insbesondere nicht verschlechtert wird.

Bei einem konkreten Ausführungsbeispiel umfasst das Filter 50 Filterfalten 66, wobei das Etikett 76 an der Reinseite 38 angeordnet ist und mit Falzbereichen 68 der Filterfalten 66 verbunden ist.

Die Kennzeichnung 76 ist beispielsweise mindestens teilweise durch eine Farbcodierung gebildet. Es kann alternativ oder zusätzlich eine andere Codierung wie beispielsweise QR-Codierung vorgesehen sein.

Die Kennzeichnung bildet Filterinformationen insbesondere über die Filtervorrichtung 26 als Ganzes und/oder über das Filter 50. Beispielsweise kann eine Teilenummer oder dergleichen vorgesehen sein.

Durch die Anordnung an der Reinseite 38 ist die Kennzeichnung für einen Bediener gut und auch auf den ersten Blick ersichtlich. Das Etikett 76 lässt sich genügend groß für eine entsprechende leichte Erkennbarkeit und auch optische Erkennbarkeit ausbilden.

Die Kennzeichnung 74 ist auch dann noch erkennbar, wenn das Filter 50 im Gebrauch war, d. h. wenn die Filtervorrichtung 26 verschmutzt ist.

Die Kennzeichnung 74 ist im Betrieb der Saugmaschine 10 in einem Reinraumbereich angeordnet.

Grundsätzlich ist es dann auch möglich, vor, im oder nach dem Betrieb der Saugmaschine 10 die Kennzeichnung 74 auszulesen. Dies kann, wie oben erwähnt, direkt über einen Bediener durch eine optische Erkennung erfolgen. Es ist alternativ oder zusätzlich möglich, dass die Kennzeichnung 74 auch maschinell ausgelesen wird. Grundsätzlich ist es auch möglich, dass die Saugmaschine 10 selber eine Leseeinrichtung für die Kennzeichnung 74 enthält und beispielsweise die Kennzeichnung 74 optisch ausliest.

Es ist auch möglich, dass die Kennzeichnung 74 in einem Datenträger realisiert ist und dieser entsprechend durch ein Lesegerät auslesbar ist.

Das Lesegerät kann auch getrennt von der Saugmaschine 10 sein.

Erfindungsgemäß wird eine Filtervorrichtung 26 bereitgestellt, welche eine einfache Auslesbarkeit ermöglicht, wobei der Verschmutzungsgrad der Kennzeichnung 74 minimiert ist.

Insbesondere durch ein Etikett 76 lässt sich eine relativ große Fläche (welche beispielsweise mindestens 15 cm² beträgt) erreichen, um einen relativ großen Flächenbereich für eine Kennzeichnung 74 und insbesondere für eine Bedruckung oder dergleichen bereitstellen.

Ferner lässt sich das Etikett 76 auf einfache Weise an dem Filter 50 positionieren. Es ist dann beispielsweise nicht notwendig, den Rahmen 52 zu bedrucken.

Oben wurde die Saugmaschine als stand-alone-Sauggerät beschrieben. Es ist auch möglich, dass eine erfindungsgemäße Filtervorrichtung mit Kennzeichnung 74 an der Reinseite 38 in anderen Saugmaschinen eingesetzt wird, wie beispielsweise einer Kehrmaschine und insbesondere auch selbstfahrenden Kehrmaschine mit Saugfunktion.

### Bezugszeichenliste

- 10: Saugmaschine
- 12: Schmutzsammelbehälter
- 14: Lenkrolle
- 16: Radeinrichtung
- 18: Saugkopf
- 20: Saugeinlass
- 22: Saugschlauch
- 24: Saugauslass
- 26: Filtervorrichtung
- 27: Filterhalter
- 28: Absaugleitung
- 30: Saugaggregat
- 32: Gebläseeinrichtung
- 34: Antriebsmotor
- 36: Schmutzseite
- 38: Reinseite
- 40: Abreinigungseinrichtung
- 50: Filter
- 52: Rahmen
- 54: Leisteneinrichtung
- 56: erste Leiste
- 58: zweite Leiste
- 60: dritte Leiste
- 62: vierte Leiste
- 64: Innenraum
- 66: Filterfalten
- 68: Falzbereich
- 70: Außenseite
- 72: Innenseite
- 74: Kennzeichnung
- 76: Etikett
- 78: Oberseite
- 80: erste Seite
- 82: zweite Seite
- 84: dritte Seite
- 86: vierte Seite
- 88: Kante (Filter)
- 90: Kante (Etikett)
- 92: Abreinigungsbereich
- 94: erste Fläche
- 96: zweite Fläche

## Patentansprüche

1. Filtervorrichtung für eine Saugmaschine (10), umfassend einen Rahmen (52) mit einem Filter (50) aus Filtermaterial, wobei das Filter (50) an dem Rahmen (52) gehalten ist und eine Reinseite (38) und eine Schmutzseite (36) aufweist, und eine Kennzeichnung (74) mit mindestens einem der Folgenden:
- die Kennzeichnung (74) ist mindestens teilweise in einer für einen Bediener erkennbaren optischen Form;
- die Kennzeichnung (74) ist mindestens teilweise maschinenlesbar;
- die Kennzeichnung (74) enthält Informationen über die Filtervorrichtung (26) und/oder das Filter (50),
**gekennzeichnet durch** mindestens ein Etikett (76), welches mindestens teilweise mit der Kennzeichnung (74) versehen ist und welches an der Reinseite (38) des Filters (50) sitzt, wobei das mindestens eine Etikett (76) stoffschlüssig mit dem Filter (50) verbunden und
mit Falzbereichen (68) des Filters (50) adhäsiv verbunden ist, und **dadurch gekennzeichnet, dass** das Filter (50) eine erste Seite (80) zu dem Rahmen (52) hin und eine der ersten Seite (80) gegenüberliegende zweite Seite (82) zu dem Rahmen (52) hin aufweist, und dass das mindestens eine Etikett (76) an der ersten Seite (80) oder in einem Abstand von höchstens 10 % einer Länge zwischen der ersten Seite (80) und der zweiten Seite (82) zu einer Kante (88) der ersten Seite (80) an dem Rahmen (52) beabstandet angeordnet ist.

2. Filtervorrichtung nach Anspruch 1, **dadurch gekennzeichnet, dass** das Filter (50) als Faltenfilter ausgebildet ist und insbesondere als Flachfaltenfilter ausgebildet ist.

3. Filtervorrichtung nach Anspruch 1 oder 2, **dadurch gekennzeichnet, dass** das Filter (50) als Zickzack-Faltung ausgebildet ist.

4. Filtervorrichtung nach einem der vorangehenden Ansprüche, **dadurch gekennzeichnet, dass** das Filter (50) hängend an dem Rahmen (52) positioniert ist und insbesondere, dass Filterfalten (66) hängend an dem Rahmen (52) positioniert sind.

5. Filtervorrichtung nach einem der vorangehenden Ansprüche, **gekennzeichnet durch** genau ein Etikett (76).

6. Filtervorrichtung nach einem der vorangehenden Ansprüche, **gekennzeichnet durch** mindestens eines der Folgenden:
- der Rahmen (52) weist einen Innenraum (64) auf, welcher von einer Leisteneinrichtung (54) des Rahmens (52) umschlossen ist, und das mindestens eine Etikett (76) ist in dem Innenraum (64) positioniert;
- das mindestens eine Etikett (76) ist so mit dem Filter (50) verbunden, dass bei Überschreiten einer bestimmten Ablösekraft das mindestens eine Etikett (76) von einem Bediener von dem Filter (50) lösbar ist;
- das mindestens eine Etikett (76) ist so mit dem Filter (50) verbunden, dass eine Ablösekraft mindestens 8 N, insbesondere mindestens 9 N und insbesondere mindestens 9,9 N beträgt und insbesondere mindestens näherungsweise 10 N beträgt;
- ein Klebematerial für eine stoffschlüssige Verbindung des mindestens einen Etiketts (76) mit dem Filter (50) weist eine Lebensdauer von mindestens 100 h bezogen auf eine Betriebsdauer des Filters (50) auf.

7. Filtervorrichtung nach einem der vorangehenden Ansprüche, **gekennzeichnet durch** mindestens eines der Folgenden:
- das mindestens eine Etikett (76) ist an der Kante (88) der ersten Seite (80) positioniert und insbesondere liegt eine Kante (90) des mindestens einen Etiketts (76) mindestens näherungsweise an der Kante (88) der ersten Seite (80) und ist vorzugsweise fluchtend mit der Kante (88) der ersten Seite (80) ausgerichtet;
- die erste Seite (80) und die zweite Seite (82) sind parallel ausgerichtet;
- das Filter (50) weist eine dritte Seite (84) zu dem Rahmen (52) hin und eine vierte Seite (86) zu dem Rahmen (52) hin auf, wobei die vierte Seite (86) beabstandet zu der dritten Seite (84) ist, die dritte Seite (84) quer zu der ersten Seite (80) orientiert ist, und die vierte Seite (86) quer zu der ersten Seite (80) orientiert ist.

8. Filtervorrichtung nach Anspruch 7, **gekennzeichnet durch** mindestens eines der Folgenden:
- die dritte Seite (84) und die vierte Seite (86) sind parallel zueinander ausgerichtet und insbesondere sind die dritte Seite (84) und die vierte Seite (86) jeweils senkrecht zu der ersten Seite (80) orientiert;
- das mindestens eine Etikett (76) ist beabstandet zu der dritten Seite (84) und/oder beabstandet zu der vierten Seite (86) angeordnet;
- das mindestens eine Etikett (76) ist in einem Eckbereich zwischen der ersten Seite (80) und der dritten Seite (84) positioniert.

9. Filtervorrichtung nach einem der vorangehenden Ansprüche, **dadurch gekennzeichnet, dass** das Filter (50) einen Abreinigungsbereich (92) zur Beaufschlagung durch eine Abreinigungseinrichtung (40) der Saugmaschine (10) aufweist, und dass das mindestens eine Etikett (76) beabstandet zu dem Abreinigungsbereich (92) positioniert ist.

10. Filtervorrichtung nach Anspruch 8 oder 9, **dadurch gekennzeichnet, dass** das mindestens eine Etikett (76) eine erste Fläche (94) aufweist und das Filter (50) eine zweite Fläche (96) aufweist, welche eine Durchströmungsfläche für einen Saugstrom ist, wobei das Verhältnis der zweiten Fläche (96) zu der ersten Fläche (94) bei mindestens 50, insbesondere bei mindestens 70 und insbesondere bei mindestens 90 liegt, und insbesondere **gekennzeichnet durch** mindestens eines der Folgenden:
- das Verhältnis der zweiten Fläche (96) zu der ersten Fläche (94) liegt bei höchstens 150, insbesondere bei höchstens 130 und insbesondere bei höchstens 110;
- das Verhältnis der zweiten Fläche (96) zu der ersten Fläche (94) liegt im Bereich zwischen 90 und 110 und insbesondere im Bereich zwischen 95 und 115 und insbesondere bei mindestens näherungsweise 100.

11. Filtervorrichtung nach einem der vorangehenden Ansprüche, **dadurch gekennzeichnet, dass** das mindestens eine Etikett (76) bedruckt ist und/oder mit einem Datenträger versehen ist.

12. Saugmaschine, welche mit mindestens einer Filtervorrichtung (26) gemäß einem der vorangehenden Ansprüche versehen ist.

13. Saugmaschine nach Anspruch 12, **dadurch gekennzeichnet, dass** ein Filterhalter (27) vorgesehen ist, an welchem die mindestens eine Filtervorrichtung (26) entnehmbar gehalten ist.

## Claims

1. Filter apparatus for a suction machine (10), comprising a frame (52) having a filter (50) made of filter material, wherein the filter (50) is held on the frame (52) and has a clean side (38) and a dirty side (36), and comprising a marking (74) with at least one of the following:
- the marking (74) is at least partially in a visual form that is visible to an operator;
- the marking (74) is at least partially machine-readable;
- the marking (74) contains information about the filter apparatus (26) and/or the filter (50),
**characterized by** at least one label (76), which is provided at least partially with the marking (74) and which sits on the clean side (38) of the filter (50), wherein the at least one label (76) is materially bonded to the filter (50) and is adhesively bonded to fold regions (68) of the filter (50), and **characterized in that** the filter (50) has a first side (80) toward the frame (52) and a second side (82) toward the frame (52), said second side being located opposite the first side (80), and **in that** the at least one label (76) is arranged on the frame (52) on the first side (80) or at a distance from an end (88) of the first side (80), said distance being at most 10% of a length between the first side (80) and the second side (82).

2. Filter apparatus in accordance with Claim 1, **characterized in that** the filter (50) is configured as a pleated filter and, in particular, is configured as a flat pleated filter.

3. Filter apparatus in accordance with Claim 1 or 2, **characterized in that** the filter (50) is configured as a zigzag folding.

4. Filter apparatus in accordance with any one of the preceding Claims, **characterized in that** the filter (50) positioned suspended on the frame (52) and, in particular, **in that** filter folds (66) are positioned suspended on the frame (52).

5. Filter apparatus in accordance with any one of the preceding Claims, **characterized by** exactly one label (76).

6. Filter apparatus in accordance with any one of the preceding Claims, **characterized by** at least one of the following:
- the frame (52) has an interior space (64), which is enclosed by a bar device (54) of the frame (52), and the at least one label (76) is positioned in the interior space (64);
- the at least one label (76) is connected to the filter (50) such that the at least one label (76) is releasable from the filter (50) by an operator when a certain releasing force is exceeded;
- the at least one label (76) is connected to the filter (50) such that a releasing force is at least 8N, in particular at least 9 N and in particular at least 9.9 N, and, in particular, is at least approximately 10 N;
- an adhesive material for a material bond of the at least one label (76) to the filter (50) has a service life of at least 100 h with respect to an operating time of the filter (50).

7. Filter apparatus in accordance with any one of the preceding Claims, **characterized by** at least one of the following:
- the at least one label (76) is positioned at the edge (88) of the first side (80) and, in particular, an edge (90) of the at least one label (76) is located at least approximately at the edge (88) of the first side (80) and is preferably oriented in alignment with the edge (88) of the first side (80);
- the first side (80) and the second side (82) are oriented in parallel;
- the filter (50) has a third side (84) toward the frame (52) and a fourth side (86) toward the frame (52), wherein the fourth side (86) is spaced at a distance from the third side (84), the third side (84) is oriented transversely to the first side (80), and the fourth side (86) is oriented transversely to the first side (80).

8. Filter device in accordance with Claim 7, **characterized by** at least one of the following:
- the third side (84) and the fourth side (86) are oriented in parallel with one another and, in particular, the third side (84) and the fourth side (86) are each oriented perpendicularly to the first side (80);
- the at least one label (76) is arranged at a distance from the third side (84) and/or at a distance from the fourth side (86);
- the at least one label (76) is positioned in a corner region between the first side (80) and the third side (84).

9. Filter apparatus in accordance with any one of the preceding Claims, **characterized in that** the filter (50) has a cleaning region (92) for being acting upon by a cleaning device (40) of the suction machine (10), and **in that** the at least one label (76) is positioned at a distance from the cleaning region (92).

10. Filter apparatus in accordance with Claim 8 or 9, **characterized in that** the at least one label (76) has a first area (94) and the filter (50) has a second area (96) which is a though-flow area for a suction flow, wherein the ratio of the second area (96) to the first area (94) is at least 50, in particular at least 70 and in particular at least 90, and, in particular, **characterized by** at least one of the following:
- the ratio of the second area (96) to the first area (94) is at most 150, in particular at most 130 and in particular at most 110;
- the ratio of the second area (96) to the first area (94) is in the range between 90 and 110 and in particular in the range between 95 and 115 and, in particular, is at least approximately 100.

11. Filter apparatus in accordance with any one of the preceding Claims, **characterized in that** the at least one label (76) is printed and/or is provided with a data carrier.

12. Suction machine, which is provided with at least one filter apparatus (26) in accordance with any one of the preceding Claims.

13. Suction machine in accordance with Claim 12, **characterized in that** a filter holder (27) is provided on which the at least one filter apparatus (26) is removably held.

## Revendications

1. Dispositif de filtration pour une machine d'aspiration (10), comprenant un châssis (52) avec un filtre (50) en matériau filtrant, dans lequel le filtre (50) est retenu sur le châssis (52) et présente un côté propre (38) et un côté sale (36), et un marquage (74) présentant au moins l'une des caractéristiques ci-dessous :
- le marquage (74) est au moins partiellement sous une forme optique identifiable par un opérateur ;
- le marquage (74) est au moins partiellement lisible par machine ;
- le marquage (74) contient des informations sur le dispositif de filtration (26) et/ou le filtre (50),
**caractérisé par** au moins une étiquette (76) qui est au moins partiellement munie du marquage (74) et qui repose au niveau du côté propre (38) du filtre (50), dans lequel la au moins une étiquette (76) est reliée au filtre (50) par complémentarité de matière et est reliée de manière adhésive aux régions pliées (68) du filtre (50), et **caractérisé en ce que** le filtre (50) présente un premier côté (80) orienté vers le châssis (52) et un second côté (82) opposé au premier côté (80) et orienté vers le châssis (52), et **en ce que** la au moins une étiquette (76) est agencée de manière espacée au niveau du premier côté (80) ou à une distance d'au plus 10 % d'une longueur entre le premier côté (80) et le second côté (82) par rapport à un bord (88) du premier côté (80) sur le châssis (52).

2. Dispositif de filtration selon la revendication 1, **caractérisé en ce que** le filtre (50) est réalisé sous la forme d'un filtre plissé et est réalisé en particulier sous la forme d'un filtre plissé plat.

3. Dispositif de filtration selon la revendication 1 ou 2, **caractérisé en ce que** le filtre (50) est réalisé sous la forme d'un pliage en accordéon.

4. Dispositif de filtration selon l'une quelconque des revendications précédentes, **caractérisé en ce que** le filtre (50) est positionné de manière suspendue au niveau du châssis (52) et en particulier **en ce que** des plis de filtre (66) sont positionnés de manière suspendue au niveau du châssis (52).

5. Dispositif de filtration selon l'une quelconque des revendications précédentes, **caractérisé par** exactement une étiquette (76).

6. Dispositif de filtration selon l'une quelconque des revendications précédentes, **caractérisée par** au moins un des éléments ci-dessous :
- le châssis (52) présente un espace intérieur (64) qui est entouré par un dispositif formant baguette (54) du châssis (52), et la au moins une étiquette (76) est positionnée dans l'espace intérieur (64) ;
- la au moins une étiquette (76) est reliée au filtre (50) de sorte qu'en cas de dépassement d'une certaine force de décollement, la au moins une étiquette (76) peut être retirée du filtre (50) par un opérateur ;
- la au moins une étiquette (76) est reliée au filtre (50) de sorte que la force de décollement est d'au moins 8 N, en particulier d'au moins 9 N et en particulier d'au moins 9,9 N et en particulier d'au moins environ 10 N ;
- un matériau adhésif destiné à relier la au moins une étiquette (76) au filtre (50) par complémentarité de matière présente une durée de vie d'au moins 100 heures par rapport à une durée de fonctionnement du filtre (50).

7. Dispositif de filtration selon l'une quelconque des revendications précédentes, **caractérisée par** au moins un des éléments ci-dessous :
- la au moins une étiquette (76) est positionnée sur le bord (88) du premier côté (80) et un bord (90) de la au moins une étiquette (76) se trouve en particulier au moins approximativement au niveau du bord (88) du premier côté (80) et est de manière préférée aligné avec le bord (88) du premier côté (80) ;
- le premier côté (80) et le second côté (82) sont orientés de manière parallèle ;
- le filtre (50) présente un troisième côté (84) orienté vers le châssis (52) et un quatrième côté (86) orienté vers le châssis (52), dans lequel le quatrième côté (86) est espacé par rapport au troisième côté (84), le troisième côté (84) est orienté transversalement par rapport au premier côté (80) et le quatrième côté (86) est orienté transversalement par rapport au premier côté (80).

8. Dispositif de filtration selon la revendication 7, **caractérisé par** au moins un des éléments ci-dessous :
- le troisième côté (84) et le quatrième côté (86) sont orientés parallèlement l'un à l'autre et le troisième côté (84) et le quatrième côté (86) sont en particulier orientés respectivement de manière perpendiculaire au premier côté (80) ;
- la au moins une étiquette (76) est espacée par rapport au troisième côté (84) et/ou espacée par rapport au quatrième côté (86) ;
- la au moins une étiquette (76) est positionnée dans une région d'angle entre le premier côté (80) et le troisième côté (84).

9. Dispositif de filtration selon l'une quelconque des revendications précédentes, **caractérisé en ce que** le filtre (50) présente une région de nettoyage (92) permettant un traitement par un dispositif de nettoyage (40) de la machine d'aspiration (10), et **en ce que** la au moins une étiquette (76) est positionnée de manière espacée par rapport à la région de nettoyage (92).

10. Dispositif de filtration selon la revendication 8 ou 9, **caractérisé en ce que** la au moins une étiquette (76) présente une première surface (94) et le filtre (50) présente une seconde surface (96) qui est une surface d'écoulement pour un courant d'aspiration, dans lequel le rapport de la seconde surface (96) sur la première surface (94) est au minimum de 50, en particulier au minimum de 70 et en particulier au minimum de 90, et en particulier **caractérisé par** au moins un des éléments ci-dessous :
- le rapport de la seconde surface (96) sur la première surface (94) est au maximum de 150, en particulier au maximum de 130 et en particulier au maximum de 110 ;
- le rapport de la seconde surface (96) sur la première surface (94) est situé dans la plage comprise entre 90 et 110 et en particulier dans la plage comprise entre 95 et 115 et en particulier est au moins approximativement de 100.

11. Dispositif de filtration selon l'une quelconque des revendications précédentes, **caractérisé en ce que** la au moins une étiquette (76) est imprimée et/ou est munie d'un support de données.

12. Machine d'aspiration munie d'au moins un dispositif de filtration (26) selon l'une quelconque des revendications précédentes.

13. Machine d'aspiration selon la revendication 12, **caractérisée en ce qu'**un porte-filtre (27) est prévu, sur lequel le au moins un dispositif de filtration (26) est retenu de manière amovible.
